## Europäisches Patentamt
## European Patent Office
## Office européen des brevets

(11) Veröffentlichungsnummer: **0 167 975**
**B1**

# EUROPÄISCHE PATENTSCHRIFT

(45) Veröffentlichungstag der Patentschrift: **27.06.90**

(21) Anmeldenummer: **85108220.6**

(22) Anmeldetag: **03.07.85**

(51) Int. Cl.$^5$: **C 08 G 69/46**

(54) **Verfahren zum kontinuierlichen Eindampfen von Caprolactam und dessen Oligomere enthaltenden wässrigen Lösungen.**

(30) Priorität: **10.07.84 DE 3425280**

(43) Veröffentlichungstag der Anmeldung:
**15.01.86 Patentblatt 86/03**

(45) Bekanntmachung des Hinweises auf die
Patenterteilung:
**27.06.90 Patentblatt 90/26**

(84) Benannte Vertragsstaaten:
**CH DE IT LI NL**

(56) Entgegenhaltungen:
**EP-A-0 123 881**
**DE-A-2 501 348**

(73) Patentinhaber: **BASF Aktiengesellschaft**
**Carl-Bosch-Strasse 38**
**D-6700 Ludwigshafen (DE)**

(72) Erfinder: **Kaeppel, Hanshelmut**
**Traminerstrasse 11**
**D-6940 Weinheim (DE)**
Erfinder: **Liebscher, Manfred, Dr.**
**Jakobstrasse 39**
**D-6520 Worms 24 (DE)**
Erfinder: **Tischendorf, Klaus Juergen, Dr.**
**In der Ortsflur 1**
**D-6719 Weisenheim (DE)**
Erfinder: **Wehr, Rudolf, Dr.**
**Mandelring 15**
**D-6706 Wachenheim (DE)**

Courier Press, Leamington Spa, England.

# EP 0 167 975 B1

## Beschreibung

Bei der Extraktion von Polycaprolactam mit Wasser erhält man wäßrige Lösungen, die Caprolactam und dessen Oligomere enthalten. Um die darin enthaltenen Wertstoffe wieder verwenden zu können, z.B. bei der Polymerisation von Caprolactam, werden diese Lösungen eingedampft. Ein solches Verfahren wird z.B. in der DE—AS 25 01 348 beschrieben. Hierbei werden die wäßrigen Lösungen, vorzugsweise mehrstufig, bis auf einen Gehalt von größer 90 Gew.-% aufkonzentriert. Der dabei anfallende Dampf wird in der Regel durch eine Kolonne geleitet, um die restlichen Mengen an Caprolactam zurückzuhalten und dann kondensiert. Das Eindampfen solcher Lösungen ist jedoch sehr energieaufwendig.

Es war deshalb die technische Aufgabe gestellt, beim Eindampfen von Caprolactam und dessen Oligomere enthaltenden wäßrigen Lösungen aufzuwendende Energie zu vermindern, ohne daß der Gehalt an Caprolactam in den kondensierten Brüden ansteigt.

Diese Aufgabe wird gelöst in einem Verfahren zum kontinuierlichen Eindampfen von Caprolactam und dessen Oligomere enthaltenden wäßrigen Lösungen, die bei der Extraction von Polycaprolactam anfallen, bei dem man die bei der Verdampfung anfallenden Brüden durch eine Kolonne leitet und kondensiert, dadurch gekennzeichnet, daß man einen Teil der einzudampfenden Caprolactam und dessen Oligomere enthaltenden wäßrigen Lösung am oberen Teil der Kolonne zugibt.

Das neue Verfahren hat den Vorteil, daß zur Eindampfung der Caprolactam und dessen Oligomere enthaltenden wäßrigen Lösung weniger Energie aufgewendet werden muß im Vergleich zu einer Arbeitsweise, bei der man die gesamte einzudampfende Lösung der Verdampferstufe zuführt.

Das neue Verfahren ist insofern bemerkenswert, als zu erwarten war, daß bei der Zugabe von monomeres Caprolactam enthaltender wäßriger Lösung der Caprolactamgehalt der kondensierten Brüden erheblich ansteigt und zudem durch ausfallende Oligomere Verstopfungen in der Kolonne auftreten.

In der Regel geht man von 2 bis 15 Gew.-% Caprolactam und dessen Oligomere enthaltenden wäßrigen Lösungen aus. Der Gehalt an Oligomeren beträgt im allgemeinen 15 bis 25 Gew.-%, bezogen auf den Feststoffgehalt der verwendeten wäßrigen Lösung. Die darin enthaltenen Oligomeren haben in der Regel einen Polymerisationsgrad n von 2 bis 7, insbesondere handelt es sich um Dimere und Trimere. Geeignete Lösungen erhält man durch Extraktion von Polycaprolactam mit Wasser bei erhöhter Temperatur. Ein geeignetes Verfahren wird beispielsweise beschrieben in der DE—PS 22 42 641. Vorteilhaft setzt man der Caprolactam und dessen Oligomere enthaltenden wäßrigen Ausgangslösung die 1 bis 5-fache Menge Caprolactam, bezogen auf die Menge an Oligomeren, zu.

Der größere Teil, vorzugsweise 95 bis 70% der einzudampfenden Lösung, wird dem Verdampfer zugeführt. Vorteilhaft wird die Verdampfung in mehreren Stufen, z.B. bis zu 3 Stufen, durchgeführt. Es hat sich bewährt, wenn man in einem ersten Schritt durch Abdestillieren des Wassers bis zu einer Konzentration von 70 bis 88 Gew.-%, vorzugsweise von 80 bis 85 Gew.-%, aufkonzentriert. Dabei werden Temperaturen von 120°C, vorzugsweise 115°C, in der eingedampften Lösungs höchstens kurzzeitig überschritten. Vorteilhaft wird dieses Aufkonzentrieren kontinuierlich, z.B. in Robert-Verdampfern, Fallfilmverdampfern, Dünnschichtverdampfern oder anderen Verdampfervorrichtungen durchgeführt. Besonders bewährt hat es sich, wenn man das Aufkonzentrieren, z.B. in bis zu 3 Stufen, durchführt. Das so erhaltene Konzentrat mit einem Feststoffgehalt von 70 bis 88 Gew.-% wird vorteilhaft in einem weiteren Schritt kontinuierlich auf einen Feststoffgehalt von größer 95 Gew.-% eingedampft, wobei Temperaturen von 130 bis 210°C, vorzugsweise 140 bis 170°C, angewandt werden. Die Verweilzeiten im zweiten Verdampferschritt betragen vorzugsweise nicht mehr als 30 min, insbesondere nicht mehr als 10 min. Bewährt haben sich für den zweiten Konzentrierungsschritt Dünnschichtverdampfer oder Fallfilmverdampfer.

Die bei der Verdampfung anfallenden Brüden, die im wesentlichen aus Wasser und geringen Mengen an Caprolactam bestehen, werden durch eine Kolonne geleitet. Geeignete Kolonnen sind beispielsweise Glockenbodenkolonnen oder Siebbodenkolonnen. Es hat sich bewährt, wenn man Kolonnen mit 6 bis 10 praktischen Böden verwendet.

Erfindungsgemäß führt man einen Teil, verteilhaft 5 bis 30%, der einzudampfenden Lösung im oberen Teil der Kolonne, vorteilhaft im oberen Drittel, insbesondere auf den obersten zwei Böden der Kolonne zu. Der am Kopfende der Kolonne austretende Dampf wird kondensiert und ggf. wieder für die Extraktion verwendet. Das aus dem Verdampfer austretende aufkonzentrierte Gemisch kann ohne weitere Reinigung oder Auftrennung allein oder gemeinsam mit anderen polyamidbildenden Ausgangsstoffen für die Herstellung von Caprolactam verwendet werden.

Das Verfahren nach der Erfindung sei an folgendem Beispiel veranschaulicht.

## Beispiel

In einem Fallfilmverdampfer (Rohrdurchmesser 38 mm) werden 5,8 m³/h einer 12 gew.-%igen wäßrigen Lösung von Caprolactam und Oligomeren, bei einer Heiztemperatur von ca. 140°C auf eine 85 bis 88 gew.-%ige wäßrige Lösung von Caprolactam und Oligomeren des Caprolactams eingedampft und in einem Dünnschichtverdampfer auf 95% konzentriert. Der abgegebene Dampf (Brüden) aus den Verdampfungsvorrichtungen wird durch eine Kolonne mit 6 praktischen Böden geleitet. Hierbei hält man am untersten Boden eine Temperatur von 110 bis 112°C und am obersten Boden eine Temperatur von 100,1 bis 100,5°C ein. Gleichzeitig beaufschlagt man den obersten Boden der Kolonne mit 1,2 t/h an einzudampfender Lösung. Das am Kopf der Kolonne anfallende Kondensat hat einen Caprolactamgehalt von 0,11 Gew.-%. Weitere Ergebnisse sind aus Tabelle 1 zu entnehmen.

2

# EP 0 167 975 B1

## TABELLE 1

| Gesamtzulauf Kolonne+Verdampfer Konzentration 12% t/h | Zulauf Verdampfer Konzentration 12% t/h | Zulauf Kolonne Konzentration 12% t/h | Caprolactam im Brüdenkondensat nach Kolonne % |
|---|---|---|---|
| 7,0 | 5,6 | 1,4 | 0,10 |
| 7,0 | 5,5 | 1,5 | 0,08 |
| 7,0 | 5,0 | 2,0 | 0,05 |

Vergleichsbeispiel

Man verfährt wie in Beispiel 1 beschrieben, führt jedoch der Verdampfungsstufe die gesamte Menge an einzudampfender Lösung, das sind 7 t/h, zu, während die Kolonne mit 1,2 t/h an Brüdenkondensat als Rücklauf beaufschlagt wird. Das am Kolonnenkopf abgezogene Kondensat hat einen Caprolactamgehalt von 0,1 Gew.-%. Weitere Ergebnisse sind aus Tabelle 2 zu entnehmen.

## TABELLE 2

| Zulauf Verdampfer Konzentration 12% t/h | Zulauf Kolonne (Brüdenkondensat) | | Caprolactam Konzentration im Brüdenkondensat nach Kolonne % |
|---|---|---|---|
| | t/h | Konzentration % | |
| 7,0 | 1,4 | 0,08 | 0,08 |
| 7,0 | 1,5 | 0,06 | 0,06 |
| 7,0 | 2,0 | 0,04 | 0,04 |

Der Heizmittelverbrauch der Arbeitsweise des Vergleichsbeispiels ist je nach der über die Kolonne zugegebenen Menge Kondensat um 8 bis 30% höher als der nach dem erfindungsgemäßen Beispiel.

## Patentansprüche

1. Verfahren zum kontinuierlichen Eindampfen von Caprolactam und dessen Oligomere enthaltenden wäßrigen Lösungen, die bei der Extraktion von Polycaprolactam anfallen, bei dem man die bei der Verdampfung anfallenden Brüden durch eine Kolonne leitet und kondensiert, dadurch gekennzeichnet, daß man einen Teil der einzudampfenden Caprolactam und Oligomere enthaltenden wäßrigen Lösung am oberen Teil der Kolonne zugibt.

2. Verfahren nach Anspruch 1, dadurch gekennzeichnet, daß man 5 bis 30% der einzudampfenden Lösung am oberen Teil der Kolonne zugibt.

3. Verfahren nach den Ansprüchen 1 und 2, dadurch gekennzeichnet, daß man den Caprolactam und dessen Oligomere enthaltenden wäßrigen Lösungen vor der Eindampfung die 1 bis 5fache Menge Caprolactam, bezogen auf die Menge an Oligomeren, zugibt.

## Revendications

1. Procédé pour l'évaporation continue de solutions aqueuses contenant du caprolactame et des oligomères de celui-ci, obtenues dans l'extraction de polycaprolactame, dans lequel on envoie à travers une colonne et on condense les vapeurs formées au cours de l'évaporation, caractérisé en ce qu'on introduit à la partie supérieure de la colonne une fraction de la solution aqueuse à évaporer, contenant du caprolactame et des oligomères.

2. Procédé selon la revendication 1, caractérisé en ce qu'on introduit à la partie supérieure de la colonne de 5 à 30% de la solution à évaporer.

3. Procédé selon la revendication 1 ou 2, caractérisé en ce qu'avant l'évaporation, on ajoute, aux solutions aqueuses contenant du caprolactame et des oligomères de celui-ci, une quantité de caprolactame comprise entre 1 et 5 fois la quantité d'oligomères.

3

# EP 0 167 975 B1

**Claims**

1. A process for continuously evaporating an aqueous solution which contains caprolactam and an oligomer thereof and is obtained in the extraction of polycaprolactam by passing the vapor from the evaporation through a column and condensing it, which comprises introducing some of the caprolactam- and oligomer-containing aqueous solution to be evaporated into the upper part of the column.

2. A process as claimed in claim 1, wherein from 5 to 30% of the solution to be evaporated is introduced into the upper part of the column.

3. A process as claimed in claim 1 or 2, wherein the aqueous solution which contains caprolactam and an oligomer thereof has added to it, before evaporation, from 1 to 5 times the amount of caprolactam, based on the amount of oligomer.